# EUROPEAN PATENT APPLICATION

(11) **EP 1 397 018 A2**
(43) Date of publication of application: **10.03.2004**
(21) Application number: 03255062.6
(22) Date of filing: 14.08.2003
(51) Int. Cl.: H04Q 7/38, H04Q 7/22

(54) **Network initiated information delivery**

(30) Priority: 30.08.2002 US 232131
(71) Applicant: LUCENT TECHNOLOGIES INC., Murray Hill, New Jersey 07974-0636 (US)
(72) Inventor: Lassers, Harold Aaron, Elmhurst, Illinois 60126 (US); Martin, Ronald Bruce, Carol Stream, Illinois 60188 (US)
(74) Representative: Watts, Christopher Malcolm Kelway, Dr.

(57) **Abstract**

The present invention provides a method and apparatus to allow network-initiated information delivery based on the delivery priority of the information and the available over-the-air resources. Originators of the information to be delivered specify the delivery priority of the information. The network monitors the utilization of the over-the-air interface and delivers the information when the utilization is appropriate given the assigned delivery priority of the information.

## Description

### FIELD OF THE INVENTION

This invention relates generally to the field of wireless communication systems, and more particularly to sending information from a network element to a user terminal.

### BACKGROUND OF THE INVENTION

Existing wireless systems support a class of services identified as "PUSH Services". In such services, information is "pushed" or delivered to the user terminal without a request for the information from the user terminal. One example of a PUSH service is advertising. Local businesses pay the local wireless providers to periodically send an advertisement to the user terminals.

Over-the-air resources are the most limiting resource in a wireless communication system. Information transmitted as part of a PUSH Service must compete for over-the-air resources with other wireless traffic. Therefore, in a heavily loaded system, there is a real possibility that the pushed messages may be blocked or that system overload may result.

Information to be delivered via a PUSH service can unnecessarily bog down system resources when the PUSH service information is sent during a heavily-loaded period. This can lead to delays, missed messages, and lost calls.

Therefore, a need exists for a method and apparatus for effectively sending out messages that are not time-sensitive without bogging down a network.

### BRIEF SUMMARY OF THE INVENTION

The present invention provides a method and apparatus that allows the originator of a set of information to specify the network conditions under which the network will deliver the information to the target user terminals. In accordance with an exemplary embodiment of the present invention, an originator initiates a session with a network-initiated information delivery control processor. During this session, the originator supplies the information to be delivered, the information priority, and the life time of the information.

In an exemplary embodiment of the present invention, a wireless radio network interface measures usage of the over-the-air resources. The resulting usage is compared to preselected trigger points, and a resulting load level is transmitted to the network initiated information delivery control processor.

In an exemplary embodiment of the present invention, a network initiated information delivery control processor compares the delivery priority of each piece of information and sends the information to target user terminals when the over-the-air load level is sufficiently low. High priority information is sent immediately, regardless of the over-the-air resource usage. Lower priority information is sent when over-the-air resource usage is not as high, thereby not clogging the network with lower priority over the air transmissions.

Advantageously, such an arrangement gives the information originators the ability to specify delivery priority of information. In addition, such an arrangement allows the network to continually monitor over-the-air resources and send information to target user terminals when surplus resources exist.

### BRIEF DESCRIPTION OF THE SEVERAL VIEWS OF THE DRAWINGS

FIG. 1 depicts a wireless communication system including a network initiated information delivery control processor in accordance with an exemplary embodiment of the present invention.

FIG. 2 depicts the network initiated delivery control processor of FIG. 1 in more detail in accordance with an exemplary embodiment of the present invention.

FIG. 3 depicts a flowchart of a method for providing network initiated information delivery in a radio network interface in accordance with an exemplary embodiment of the present invention.

FIG. 4 depicts a flowchart of a method for providing network.initiated information delivery in a network initiated information delivery control processor in accordance with an exemplary embodiment of the present invention.

### DETAILED DESCRIPTION OF THE INVENTION

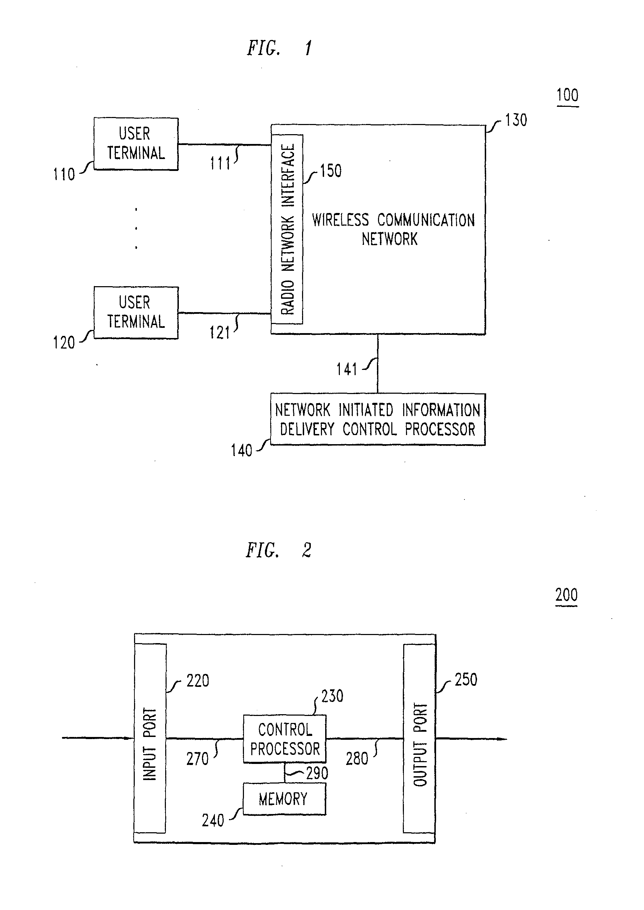

FIG. 1 depicts a wireless communication system 100 in accordance with an exemplary embodiment of the present invention. Wireless communication system 100 includes user terminals 110 and 120, wireless communication network 130, and network information delivery control processor 140. Wireless communication network 130 comprises know functions necessary to operate and maintain wireless communications including radio network interface 150. Wireless communication network 130 can be based on any well known technology, such as analog or digital.

User terminals 110 and 120 are coupled to radio network interface via links 111 and 121, respectively. Links 111 and 121 provide communication among a plurality of user terminals such as 110 and 120. User terminals 110 and 120 as well as links 111 and 121 can be based on any well-known technologies, such as Time Division Multiple Access (TDMA) or Code Division Multiple Access (CDMA). Only a single block of communications network elements 130, radio network interface 150, two user terminals 110 and 120, and single network initiated information delivery control processor 140 are depicted in FIG. 1 for clarity.

In the embodiment depicted in FIG. 1, user terminal 110 and user terminal 120 are coupled to and communicating with communication network 130. It should be understood that in an actual network a plurality of user terminals are coupled to communication network 130. As depicted in FIG. 1, user terminal 110 is communicating with communication network 130 via link 111. User terminal 120 is communicating with communication network 130 via link 121. Links 111 and 121 are over-the-air links and can either be the same or different.

In the embodiment depicted in FIG. 1, network initiated information delivery control processor 140 is coupled to and communicating with communication network 130 via link 141. Link 141 can be based on any known technology such as digital, analog, wireless, or wireline. It should be understood that in an actual network a plurality of network initiated information delivery control processors can be coupled to wireless communication network 130.

In an exemplary embodiment of the present invention, network initiated information delivery control processor 140 receives a call request from a user terminal, such as user terminal 110. The call request can originate from a terminal connected to communication network 130 or from any other network that can interface with communication network 130 such as a Public Switched Telephone Network (PSTN).

Network initiated information delivery control processor 140 accepts the call and requests instructions from originating user terminal 110. Communication between originating user terminal 110 and network initiated information delivery control processor 140 can be sent a variety of ways, including but not limited to using inband analog signals and out-of-band messages.

Network initiated information delivery control processor 140 accepts instructions from originating user terminal 110. The instructions received from originating user terminal 110 preferably comprise information to be delivered to specific other user terminals, unique identifiers of the other user terminals, information delivery priority, and information life time. The unique identifiers of the other user terminals comprise information such as the address or geographical location of the other user terminals. The information life time is an indication of a time period after which the information is no longer to be delivered. These instructions are stored in network initiated information delivery control processor 140.

In accordance with an exemplary embodiment of the present invention, network initiated information delivery control processor 140 instructs radio network interface 150 when to report the load level on over-the-air links 111 and 121. These instructions include but are not limited to a periodic interval, demand for real-time measurement, or when the load level has changed by a predetermined amount. Additional instructions include trigger points against which radio network interface 150 compares the actual over-the-air utilization. These instructions are sent via link 141. Network initiated information delivery control processor 140 and radio network interface 150 communicate via link 141 using any known technology such as digital, analog, wireless, or wireline.

In accordance with an exemplary embodiment of the present invention, radio network interface 150 monitors and stores the utilization of link 111. This monitoring can be accomplished via methods such as buffer size and message delay. Radio network interface 150 compares actual monitored utilization with the predetermined trigger levels received from the network initiated information delivery control processor 140 to derive a normalized load level for link 111. Radio network interface 150 reports the load level for link 111 as instructed by network initiated information delivery control processor 140. These instructions include but are not limited to a periodic interval, demand for real time measurement, or when the load level has changed by a predetermined amount.

Network initiated information delivery control processor 140 receives and stores the current load level reported by radio network interface 150. Network initiated information delivery control processor 140 compares the delivery priority of each stored set of information to determine at what load level each piece of information is designated for transmission. This transmission can be made to a specific user terminal, such as user terminal 120, a list of user terminals, or all user terminals in a specific geographical area. In accordance with a preferred embodiment of the present invention, network initiated information delivery control processor 140 increases the delivery priority of the information if it has not been transmitted for a predetermined period of time. In addition, network initiated information delivery control processor 140 will delete information that has exceeded the life time specified by the originating user terminal.

FIG. 2 depicts network initiated information deliver processor 140 in accordance with an exemplary embodiment of the present invention. Network initiated information deliver processor 140 comprises input port 220, control processor 230, memory 240, output port 250, and links 270, 280, and 290. Control processor 230 may comprise a plurality of processors, each with substantially identical functions or with functions distributed among them by function type. However, a single control processor 230 is shown in FIG. 2 for clarity. Links 270, 280, and 290 are preferably Ethernet connections, but can alternately be any communication protocol that provides for communication between elements.

In accordance with an exemplary embodiment of the present invention, input port 220 and output port 250 interface with wireless communication network 130. This can be based on any known technology, such as analog, digital, wireless, and wireline. Input port 200 and output port 250 may be located on the same physical link. Input port 220 and output port 250 preferably carry both bearer and control information between control processor 230 and wireless communication network 130. Input port 220 and output port 250 can be connected directly to wireless communication network 130, or to any network which can be connected to wireless communication network 130, such as the Public Switched Telephone Network (PSTN) .

Control processor 230 interacts with originating users to obtain the information to be transferred and to receive instructions concerning the transmission of the information. Control processor 230 interacts with radio network interface 150 to request load level information and to transmit the stored information when it is appropriate. Control processor 230 interacts with memory 240 to determine what information should be transmitted given received load levels, elevates the delivery priority of information that has not been transmitted for some predetermined interval, and deletes information which is no longer valid. Information is considered to be no longer valid when the life time specified by the user terminal originating the information has been exceeded.

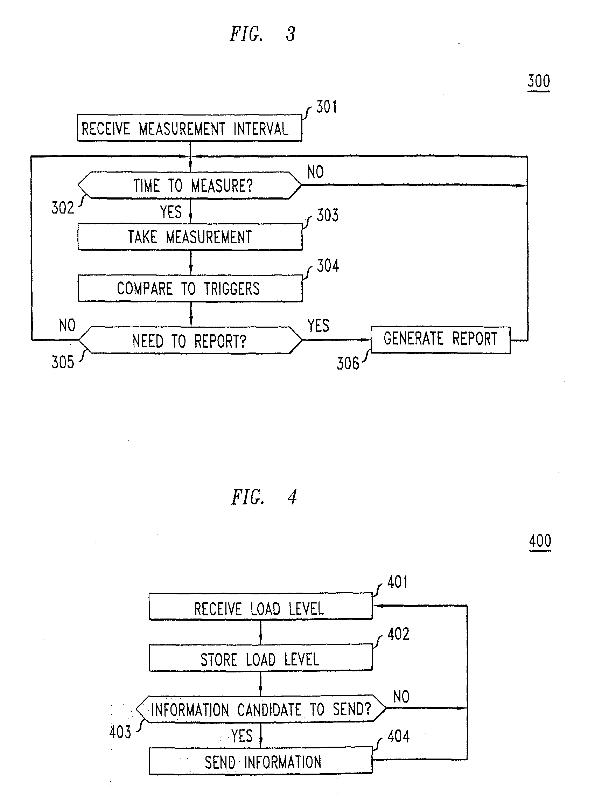

FIG. 3 depicts a flowchart 300 of a method for providing network initiated information delivery in a radio network interface in accordance with an exemplary embodiment of the present invention.

Radio network interface 150 receives (301) instructions from network initiated information delivery processor 140 concerning the measuring and reporting intervals of the load level. Given these instructions and the knowledge of when the last measurement was made, radio network interface 150 determines (302) if a measurement is to be made. If not, radio network interface waits until it is appropriate to make a measurement.

If it is time to make a measurement as determined at step 302, a measurement of the over-the-air utilization is taken (303). This measurement can be taken in a variety of ways, including but not limited to buffer size and message delay.

Radio network interface 150 compares (304) the measurement to predetermined trigger levels and generates a normalized load level for the over-the-air link. Radio network interface 150 determines (305) if a report should be generated and sent to network initiated information delivery control processor 140. This decision can be based on a variety of factors including but not limited to elapsed time since the last report was generated or number of load levels traversed since the last report was generated. If a report should be generated, radio network interface 150 generates (306) a report.

FIG. 4 depicts a flowchart 400 of a method for providing network initiated information delivery in a network initiated information delivery control processor in accordance with an exemplary embodiment of the present invention.

Network initiated information delivery control function 140 receives (401) load levels from the various radio network interfaces with which it communicates. Network initiated information delivery control function 140 then stores (402) the load level values received.

Network initiated information delivery control function 140 then determines (403) which if any of the stored information should be transmitted to user terminals based on the reported load levels and the instructions from the user terminal which originated the information. As part of the decision process, information that has not been transmitted for a predetermined period of time will be assigned a higher delivery priority if the information had been designated by the originator or the network initiated information delivery control function as a candidate for escalation, and information whose life time has expired will be deleted. If it is appropriate to sent information, the information is sent (404).

The present invention thereby provides a method and apparatus that allows pushed messages to be sent efficiently without overloading the communication system. Utilizing the present invention, a communication system can send pushed messages without causing delay, missed messages, or lost calls, especially in heavily loaded systems.

While this invention has been described in terms of certain examples thereof, it is not intended that it be limited to the above description, but rather only to the extent set forth in the claims that follow.

## Claims

1. A Network Initiated Information Delivery Control Processor Apparatus for providing network initiated information delivery in a wireless communication system, the Network Initiated Information Delivery Control Processor Apparatus comprising:
an input port for receiving a load level indication from a radio network interface, instructions from end users, and data to be transmitted from end users;
a processor for executing the instructions received from the end users;
memory means for storing the data received from the end users; and
an output port for transmitting the data to the end users and requesting load level information from the radio network interfaces.

2. A Network Initiated Information Delivery Function in accordance with claim 1, wherein the input port further receives address information for a recipient.

3. A Network Initiated Information Delivery Function in accordance with claim 2, wherein the address information comprises a unique address for a user terminal.

4. A Network Initiated Information Delivery Function in accordance with claim 2, wherein the address information comprises a target geographical area.

5. A method for providing network-initiated information delivery in a wireless communication system, the method comprising the steps of:
measuring a current load level in a wireless radio network at a wireless radio network interface;
setting a plurality of trigger levels for the wireless radio network at the wireless radio network interface;
determining a load state by comparing the current load level in the wireless radio network and the plurality of trigger levels; and
reporting the load state to a network-initiated information delivery control function.

6. A method for providing network-initiated information delivery in accordance with claim 5, further comprising setting geographical areas to be measured.

7. A method for providing network-initiated information delivery in accordance with claim 5, wherein the step of reporting the load state to a network-initiated information delivery control function comprises reporting the load state when a predetermined load state is reached.

8. A method for providing network-initiated information delivery in accordance with claim 5, wherein the step of reporting the load state to a network-initiated information delivery control function comprises reporting the load state when a predetermined number of load states have changed since a previous report.

9. A method for providing network-initiated information delivery in a wireless communication system, the method comprising the steps of:
receiving load state information from a radio network interface at a network initiated information delivery control function;
storing the load state information from the radio network interface at the network initiated information delivery control function;
determining which stored data is a candidate for transmission; and
transmitting the candidate data to a recipient.

10. A method for providing network-initiated information delivery in accordance with claim 9, wherein the stored data comprises a plurality of messages, the method further comprising increasing a message priority as a message ages.
